# EUROPÄISCHE PATENTANMELDUNG

(11) **EP 0 780 352 A1**
(43) Veröffentlichungstag der Anmeldung: **25.06.1997**
(21) Anmeldenummer: 96106391.4
(22) Anmeldetag: 24.04.1996
(51) Int. Cl.: C04B 41/48, C04B 41/45, B05D 7/00, B05D 1/04

(54) **Gefärbte Ziergefässe und Ziergegenstände aus Keramik und Verfahren zur Herstellung derselben**

(30) Priorität: 23.12.1995 DE 19548545; 10.01.1996 DE 19600703
(71) Anmelder: WILHELM SÖNDGEN GmbH, D-53343 Wachtberg-Adendorf (DE)
(72) Erfinder: Söndgen, Peter, 53343 Wachtberg-Adendorf (DE); Peter, Dietrich, 56204 Hillscheid (DE)
(74) Vertreter: Werner, Hans-Karsten, Dr.Dipl.-Chem.

(57) **Zusammenfassung**

Die gefärbten Ziergefäße und Ziergegenstände aus Keramik bestehen aus einem gebrannten, zumindest außen unglasiertem Ziergefäß oder Ziergegenstand aus Keramik, einer farbigen, aus wäßrigen Dispersionen aufgetragenen Farbschicht und einer aus Pulverlack aufgebrannten transparenten Schutzschicht.

## Beschreibung

Gefärbte Ziergefäße und Ziergegenstände aus Keramik werden bisher hergestellt durch Auftrag farbiger Glasuren sowie seit einiger Zeit auch durch elektrostatischen Auftrag von farbigen Pulverlacken und anschließendes Einbrennen dieser Pulverlacke bei Temperaturen zwischen 200°C und 300°C.

Das Auftragen von farbigen Glasuren ist zwar seit langer Zeit bekannt, jedoch mit erheblichem Aufwand verbunden. Das elektrostatische Auftragen von farbigen Pulverlacken ist weniger aufwendig, jedoch ist es mit dem Nachteil verbunden, daß die Keramikgefäße oder Ziergegenstände nur einfarbig eingefärbt werden können. Bereits kleine Dickenschwankungen im Pulverauftrag führen zu ungleichmäßiger Einfärbung und somit zu Produkten minderer Qualität.

Die Erfindung hat sich die Aufgabe gestellt, einfacher, preiswerter und doch zuverlässig die gefärbte Ziergefäße und Ziergegenstände aus Keramik zur Verfügung zu stellen, welche auch mehrfarbig eingefärbt sein können und dennoch eine Farbschicht aufweisen, die weder abwaschbar noch leicht abkratzbar ist.

Es wurde jetzt gefunden, daß diese Aufgabe besonders einfach dadurch gelöst werden kann, daß gebrannte, zumindest außen nicht glasierte Ziergefäße und Ziergegenstände aus Keramik zunächst mit einer oder mehreren farbigen, wäßrigen Dispersion eingefärbt, nach dem Abtrocknen elektrostatisch mit einem transparenten Pulverlack beschichtet und dann auf Temperaturen zwischen 200°C und 300°C erhitzt werden.

Es wurde festgestellt, daß gebrannte, nicht glasierte Keramik in der Lage ist, mit farbigen, wäßrigen Dispersionen eingefärbt zu werden, wobei diese rasch abtrocknen und gleichmäßig eingefärbte Oberflächen entstehen. Bereits nach kurzem Abtrocknen können diese Gegenstände elektrostatisch mit einem transparenten Pulverlack beschichtet werden. Nach dem Erhitzen auf Temperaturen zwischen 200°C und 300°C, vorzugsweise 250°C bis 280°C entstehen je nach verwendetem Pulverlack matte oder hochglänzende Oberflächen, welche die darunterliegenden eingefärbten Oberflächen der Keramik sichtbar halten und dennoch nachhaltig schützen. Die durch Erhitzen eingebrannten elektrostatischen Pulverlacke sind ausreichend kratzfest, um die erfindungsgemäßen Ziergefäße und Ziergegenstände abwaschbar zu machen. Nur mit sehr harten und scharfen Gegenständen läßt sich diese Schutzschicht beschädigen oder zerstören.

Überraschenderweise sind die meisten im Handel befindlichen farbigen, wäßrigen Dispersionen gegen kurzzeitiges Erhitzen auf Temperaturen zwischen 200°C und 300°C beständig. Im allgemeinen genügt eine Vorwärmzeit von 10 Minuten und ein Nachhärten des elektrostatisch aufgetragenen Pulverlacks während weiterer 10 Minuten, um die gewünschte eingefärbte Beschichtung zu erzeugen.

Bekanntlich sind farbige, wäßrige Dispersionen in einer breiten Farbpalette im Handel erhältlich. Weiterhin ist es möglich, diese Farben miteinander zu vermischen, um weitere Farbnuancen zu erzeugen.

Als farbige, wäßrige Dispersionen kommen insbesondere gefärbte Kunststoffdispersionen in Frage. Es können aber auch Aquarellfarben, Textilfarben (sogenannte Stoff-Malfarben), Plakafarben und wasserlösliche Holzfarben verwendet werden.

Erfindungsgemäß ist es darüber hinaus möglich, die Ziergefäße oder Ziergegenstände mechanisch oder manuell verschieden einzufärben. Beispielsweise können Schablonen verwendet werden um einzelne Teile der Oberfläche anders einzufärben. Es ist auch möglich, Abziehbilder mit den gewünschten Farben auf die Keramik aufzutragen und anschließend durch Auftragen des transparenten Pulverlacks zu versiegeln, indem man zunächst eine farblose Kunststoffdispersion aufträgt, dann diese angetrocknete Schicht mit einem Abziehbild, das mit Farbpigmenten eingefärbt ist, versieht und dann mit transparentem Pulverlack versiegelt.

Die farbigen, wäßrigen Dispersionen können in üblicher Weise durch Aufsprühen, Aufpinseln, Aufstempeln oder Rollen auf die Oberfläche der Ziergefäße oder Ziergegenstände aufgebracht werden.

Die erfindungsgemäß eingesetzten, einbrennbaren, elektrostatisch verarbeitbaren organischen Pulverlacke haften normalerweise nur auf elektrisch leitenden und geerdeten oder sogar elektrostatisch aufgeladenen Materialien. Da Keramik an sich ein guter Isolator ist, war es zunächst verwunderlich, daß es überhaupt möglich ist, einbrennbare, elektrostatisch verarbeitbare organische Pulverlacke auf Keramik aufzubringen. Anscheinend ist jedoch Keramik bei Temperaturen zwischen 200°C und 300°C ausreichend leitfähig, um die elektrostatische Aufladung der Pulverlackteilchen abzuleiten. Weiterhin wird beim Auftragen der Pulverlacke bereits bei Temperaturen gearbeitet, bei denen der Einbrennvorgang stattfindet. Dies führt dazu, daß die auf der Oberfläche der Keramikkörper auftreffenden Pulverlackteilchen gelieren und dadurch schon etwas miteinander verbunden werden. Beim eigentlichen Einbrennvorgang, der im allgemeinen zwischen 5 und 15 Minuten liegt, bildet sich die endgültige Lackschicht aus. Diese ist mit den Keramikschichten, ob eingefärbt oder nicht, so fest verbunden, daß eine dauerhafte Haftung gewährleistet ist.

Je nach Art des verwendeten Pulverlacks und der Oberflächenstruktur des eingesetzten Keramikkörpers entsteht eine mehr oder weniger matterscheinende Oberfläche. Mit einigen Pulverlacken ist es jedoch möglich, auch glänzende Oberflächen zu erzeugen.

Handelsüblich, elektrostatisch verarbeitbare organische Pulverlacke bestehen meist aus Polyesterepoxidpulvern, die die verschiedensten Farbpigmente enthalten. Erfindungsgemäß werden jedoch nur farblose oder sehr schwach eingefärbte Pulverlacke verwendet, da die eigentliche Farbtönung von der darunter befindlichen eingefärbten Schicht der wäßrigen Dispersion stammt.

Es ist somit erfindungsgemäß möglich, nicht nur eine größere Farbpalette zum Einsatz zu bringen, sondern auch mehrfach eingefärbte oder sogar von Hand bemalte Keramikteile mit der eingebrannten Schutzschicht zu versiegeln.

Als Ausgangsmaterial für die gebrannten Ziergefäße und Ziergegenstände kommen prinzipiell alle üblichen Ausgangsmaterialien für Keramik in Frage, d.h. alle Tone, die hell sind, cremefarbig sind oder rot brennen. Gewünschtenfalls können gezielt einzelne Teile der Keramikgefäße oder Keramikgegenstände ungefärbt bleiben. Auch diese Teile werden erfindungsgemäß mit dem eingebrannten Pulverlack versiegelt.

## Patentansprüche

1. Gefärbte Ziergefäße und Ziergegenstände aus Keramik bestehend aus einem gebrannten, zumindest außen unglasiertem Ziergefäß oder Ziergegenstand aus Keramik, einer farbigen, aus wäßrigen Dispersionen aufgetragenen Farbschicht und einer aus Pulverlack aufgebrannten transparenten Schutzschicht.

2. Verfahren zur Herstellung von gefärbten Ziergefäßen und Ziergegenständen aus Keramik, dadurch gekennzeichnet, daß gebrannte, zumindest außen nicht glasierte Ziergefäße und Ziergegenstände aus Keramik zunächst mit einer oder mehreren farbigen, wäßrigen Dispersion eingefärbt, nach dem Abtrocknen elektrostatisch mit einem transparenten oder schwach eingefärbten Pulverlack beschichtet und dann auf Temperaturen zwischen 200°C und 300°C erhitzt werden.

3. Verfahren gemäß Anspruch 2, dadurch gekennzeichnet, daß die farbigen, wäßrigen Dispersionen aufgetragen werden durch Sprühen, Pinseln, Stempeln, Drücken oder Rollen.

4. Verfahren gemäß einem der Ansprüche 2 oder 3, dadurch gekennzeichnet, daß beim Auftrag der wäßrigen Dispersionsfarben Schablonen oder Abziehbilder verwendet werden.
